Europäisches Patentamt

European Patent Office

Office européen des brevets

(11) Veröffentlichungsnummer: **0 244 618 B1**

(19)

(12) **EUROPÄISCHE PATENTSCHRIFT**

(45) Veröffentlichungstag der Patentschrift: 24.07.91

(21) Anmeldenummer: 87104391.5

(22) Anmeldetag: 25.03.87

(51) Int. Cl.⁵: **F16L  3/22**, F28F 9/00, F16L 3/08

(54) **Halter zum Festlegen axial beweglicher Teile.**

(30) Priorität: 31.03.86 US 846433

(43) Veröffentlichungstag der Anmeldung:
11.11.87 Patentblatt  87/46

(45) Bekanntmachung des Hinweises auf die
Patenterteilung:
24.07.91 Patentblatt  91/30

(84) Benannte Vertragsstaaten:
**DE ES FR GB IT**

(56) Entgegenhaltungen:
EP-A- 0 021 597      CH-A- 350 699
FR-A- 1 409 853      FR-A- 2 354 651
FR-A- 2 439 350      GB-A- 2 005 758
US-A- 4 148 113      US-A- 4 220 199
US-A- 4 344 478

(73) Patentinhaber: **DEERE & COMPANY**
**1 John Deere Road**
**Moline, Illinois 61265(US)**

(72) Erfinder: **Easton, David Joseph**
**1409 Brenton Drive**
**Cedar Falls Iowa 50613(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

**Beschreibung**

Die Erfindung bezieht sich auf einen Halter zum Festlegen axial beweglicher, zueinander parallel angeordneter Teile, insbesondere von Wärmetauscherrohren mit mindestens zwei jeweils einen der Teile umgebenden Klemmteilen, die über eine Grundplatte miteinander verbunden und auf bereits angeordnete Teile aufsetzbar sind.

Aus der US-A-4,220,199 sind Halter bekannt, die auf bereits montierte Teile aufschiebbar sind, um diese festzulegen - diese Halter sind jedoch nur gleichzeitig auf die Teile aufschiebbar, was nur unter einem hohen Kraftaufwand möglich ist.

Ein weiterer Halter (US-A-4 344 478) besteht aus einem Klemmring, der an einer Stelle seiner Mantelfläche in axialer Richtung geschlitzt ist, wobei der Schlitz eine Breite aufweist, die es ermöglicht, den Klemmring radial auf ein Wärmetauscherrohr eines Wärmetauschers aufzustecken. Auf seiner Mantelfläche sind Rippen angebracht, an denen mit einer Zange angegriffen werden kann, um den Klemmring von dem Wärmetauscherrohr wieder abzuziehen.

Diesem Halter haftet der Nachteil an, daß er mit einem Werkzeug demontiert werden muß und daß er zunächst in eine Lage gebracht werden muß, in der man mit dem Werkzeug angreifen kann.

Die der Erfindung zugrunde liegende Aufgabe wird darin gesehen, einen Halter zum Festlegen axial beweglicher Teile zu entwickeln, der ohne ein Werkzeug ohne großen Kraftbedarf montiert und demontiert werden kann und der zur Montage und Demontage stets richtig positioniert ist.

Diese Aufgabe ist durch die erfinderische Lehre gemäß Patentanspruch 1 gelöst worden.

Auf diese Weise kann der Halter zu Montage- und Demontagezwecken an der Grundplatte ergriffen und leicht gehandhabt werden. Die Verbindung der Klemmteile gewährleistet, daß sich der Halter nicht um den Teil dreht, so daß er stets seine Stellung beibehält. Die Anordnung der Öffnungen erlaubt es, den Halter zunächst radial auf einen Teil aufzuschieben und ihn dann um diesen auf den anderen Teil zuzuschwenken und ihn darauf zu befestigen. Im Detail können die Öffnungen vorteilhaft so angeordnet werden, wie es in den Ansprüchen 3 und 4 angegeben ist.

Die Handhabung des Halters und seine Montage- bzw. Demontage wird durch den nach Anspruch 2 vorgesehenen Hebelarm erleichtert. Der Hebelarm macht es möglich, die Klemmteile mit einer relativ hohen Klemmkraft auf die Teile aufzusetzen.

Die Ausgestaltung des Halters gemäß Anspruch 5 bewirkt, daß der Hebelarm mit größter Wirkung benutzt werden kann, da der Abstand zwischen dem einen der Teile, auf dem sich der Halter mittels des ersten Klemmteils abstützt, und dem Ende des als Hebelarm ausgebildeten Endbereichs größer ist als der Abstand des zweiten Klemmteils zu dem Ende des Hebelarms.

Der Hebelarm kann sehr leicht erfaßt werden, wenn er, wie in Anspruch 6 ausgeführt ist, über den benachbarten Halter übersteht.

Die vorteilhafte Anordnung gemäß Anspruch 7 sorgt für eine axiale Unbeweglichkeit der Teile, ohne daß die Klemmteile einen Kraftschluß mit diesen eingehen müßten.

In der Zeichnung ist ein nachfolgend näher beschriebenes Ausführungsbeispiel der Erfindung dargestellt. Es zeigt:

Figur 1    mehrere erfindungsgemäße Halter in Vorderansicht an einem Wärmetauscher,

Figur 2    zwei Halter nach Figur 1 in Draufsicht und im Schnitt entlang der Linie 2 - 2 in Figur 1 und in Richtung der dazugehörigen Pfeile,

Figur 3    einen Halter nach Figur 1 in einer Ansicht gemäß den Pfeilen in Figur 2 und

Figur 4    einen Schnitt entlang der Linie 4 - 4 in Figur 1 und in Blickrichtung der dazugehörigen Pfeile.

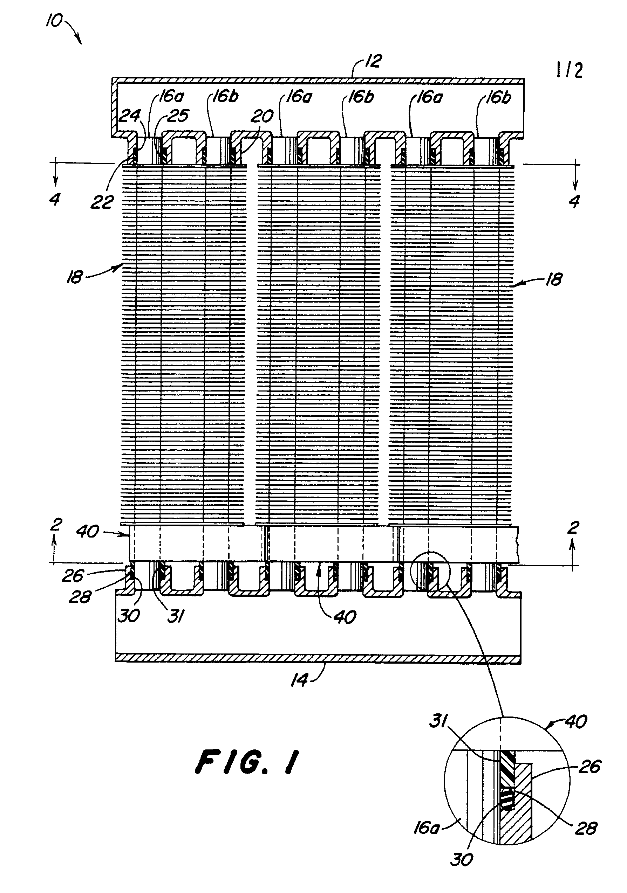

In Figur 1, die nur schematisch, nicht aber in einem wahren Maßstab erstellt ist, ist ein Abschnitt eines Wärmetauschers 10 oder Kühlers mit einem Einlaßkanal 12 und einem Auslaßkanal 14 dargestellt, die über eine Vielzahl von Teilen 16a, 16b, und zwar in diesem Ausführungsbeispiel von sich parallel erstreckenden Wärmetauscherrohren, miteinander verbunden sind. Jeweils zwei Teile 16a, 16b tragen auf ihrer Mantelfläche gemeinsam einen separaten Satz Kühlrippen 18. Der Einlaßkanal 12 ist mit einer der Zahl der Teile 16a, 16b entsprechenden Zahl von hohlen zylindrischen Ansätzen oder Hülsen 20 versehen, die sich von dem Einlaßkanal 12 forterstrecken. Jede Hülse 20 enthält einen Ringraum 22, der sich über einen Teil ihrer axialen Länge von ihrem äußeren Ende her erstreckt und in sich einen O-Ring 24 aufnimmt, der von einem Haltering 25 festgelegt wird. Der O-Ring 24 dichtet den Spalt zwischen den Enden der Teile 16a, 16b und der Innenwand der Hülse 20 ab. Der Auslaßkanal 14 enthält in gleicher Weise Hülsen 26 mit einem Ringraum 28, einem O-Ring 30 und einem Haltering 31 zum Festhalten und Abdichten der anderen Enden der Teile 16a, 16b.

Ein Ende jedes Satzes von Kühlrippen 18 liegt direkt an einem Ende der Hülsen 20 an, während dessen anderes Ende einen Abstand zu den Hülsen 26 aufweist. Der Bereich der Teile 16a, 16b, der sich über den Abstand erstreckt, wird von einem erfindungsgemäßen Halter 40 umgeben, der eine Axialbewegung der Teile 16a, 16b verhindert, indem er sowohl an dem Satz Kühlrippen 18 als auch an dem Ende der Hülse 26 anliegt.

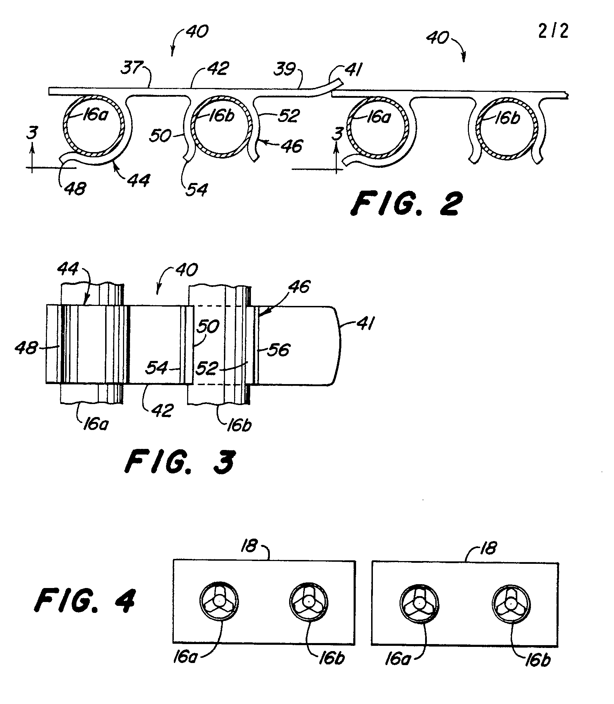

Mit Blick auf die Figuren 2 und 3 erkennt man, daß jeder Halter 40 eine rechteckige Grundplatte 42 enthält, von deren einer Seite sich ein erster Klemmteil 44 und ein zweiter Klemmteil 46 forterstrecken. Jede Grundplatte 42 ist mit einem Bereich 37 und mit einem Hebelarm 39 versehen, wobei sich der Bereich 37 zwischen den beiden Klemmteilen 44, 46 erstreckt und der Hebelarm 39 von dem zweiten Klemmteil 46 in Richtung auf einen benachbarten Halter 40 verläuft. Der Hebelarm 39 läuft in einer gebogenen Lasche 41 aus, die an einem anderen benachbarten Ende der Grundplatte 42 des benachbarten Halters 40 anliegt und diesen überlappt, wie dies sehr gut in Figur 2 zu erkennen ist. Der erste Klemmteil 44 ist im allgemeinen von teilzylindrischer Gestalt, um das eine Ende des Teils 16a lösbar aufzunehmen und zu halten. Er bildet eine Öffnung zum Übergreifen des Teils 16a, die sich in einer von dem zweiten Klemmteil 46 fortzeigenden Öffnungsrichtung erstreckt, die also wie auch die Längsachse durch den Raum innerhalb des ersten Klemmteils 44 etwa parallel zu der Grundplatte 42 des Halters 40 verläuft. Das äußere Ende des ersten Klemmteils 44 ist als eine gebogene Lasche 48 ausgebildet, die das Aufstecken des ersten Klemmteils 44 auf den Teil 16a erleichtert.

Der zweite Klemmteil 46 wird von einem oder zwei teilzylindrischen, gebogenen Bügeln 50, 52 gebildet, die gegebenenfalls gemeinsam den einen Endbereich des Teils 16b umgreifen und halten. Die Bügel 50, 52 laufen in gebogene Laschen 54, 56 aus. Die Bügel 50, 52 und die Laschen 54, 56 bilden zwischen sich eine Öffnung, die sich von der Grundplatte 42 weg öffnet, und zwar in einer Öffnungsrichtung, die im wesentlichen rechtwinklig, d. h. mit 90 Winkelgraden, zu der Öffnungsrichtung des ersten Klemmteils 44 verläuft. Zudem verläuft die Längsachse des von dem zweiten Klemmteil 46 umschlossenen Raumes im wesentlichen parallel zu der Grundplatte 42 und zu der Längsachse des Raumes innerhalb des ersten Klemmteils 44.

Eine Variation der vorliegenden Erfindung kann darin bestehen, die Grundplatte 42 des Halters 40 zu verlängern und auf ihr ein oder mehrere, d. h. dritte, vierte usw., zusätzliche Klemmteile entsprechend dem zweiten Klemmteil 46 und diesem benachbart anzubringen. Zudem können derartige Halter 40 auch dann verwendet werden, wenn jeder Teil 16a, 16b für sich einen eigenen Satz Kühlrippen 18 enthält.

Um den Halter 40 von einem Paar Teile 16a, 16b zu entfernen, hebt man die Lasche 41 an und von dem benachbarten Halter 40 weg. In dem Fall, daß die Lasche 41 zu dicht an dem benachbarten Halter 40 anliegt, kann auch ein Schraubendreher oder dergleichen verwendet werden, um die Lasche 41 anfänglich von dem benachbarten Halter 40 wegzubewegen. Der Hebelarm 39 dient zum Schwenken des Halters 40 um die Längsachse des Teils 16a, wobei der zweite Klemmteil 46 außer Eingriff kommt mit dem Teil 16b. Spätestens dann kann der Halter 40 an seiner Lasche 41 direkt ergriffen werden, und sobald der zweite Klemmteil 46 außer Eingriff mit dem Teil 16b ist, kann auch der erste Klemmteil 44 von dem Teil 16a abgezogen werden, so daß der Halter 40 vollkommen von den Teilen 16a und 16b entfernt werden kann. Nachdem der Halter 40 demontiert ist, können die Teile 16a, 16b mit Blick auf Figur 1 nach unten geschoben und außer Eingriff mit den Hülsen 20 gebracht werden. Anschließend können die Teile 16a, 16b nach oben geschoben und außer Eingriff mit den Hülsen 26 gebracht werden. Der Montagevorgang der Teile 16a, 16b erfolgt in der umgekehrten Reihenfolge.

**Patentansprüche**

1. Halter (40) zum Festlegen axial beweglicher, zueinander parallel angeordneter Teile (16a, 16b), insbesondere von Wärmetauscherrohren, mit mindestens zwei jeweils einen der Teile (16a, 16b) umgebenden Klemmteilen (44, 46), die über eine Grundplatte (42) miteinander verbunden und auf bereits angeordnete Teile (16a, 16b) aufsetzbar sind, dadurch gekennzeichnet, daß die Klemmteile (44, 46)

   a) an ihrer Mantelfläche jeweils eine Öffnung aufweisen, von denen die eine gegenüber der anderen um ca. 90 Winkelgrade versetzt ist,

   b) auf bereits angeordnete Teile (16a, 16b) aufsetzbar sind, indem einer der Klemmteile (44, 46) radial auf einen der Teile (16a, 16b) durch seine Öffnung aufschiebbar und um diesen auf gleiche Weise in Eingriff mit dem anderen Teil (16b, 16a) schwenkbar ist, und daß sie

   c) derart an der Grundplatte (42) angebracht sind, daß eine mittig durch die Öffnung des einen Klemmteils (44) verlaufende Ebene eine mittig durch die Öffnung des anderen Klemmteils (46) verlaufende Ebene im Mittelpunkt des von dem anderen Klemmteil (46) umgebenen Innenraums schneidet.

2. Halter nach Anspruch 1, dadurch gekennzeichnet, daß die Grundplatte (42) einenends als Hebelarm (39) endet.

3. Halter nach Anspruch 1 oder 2, dadurch gekennzeichnet, daß die Öffnungsrichtung des ersten Klemmteils (44) parallel zu der Grundplatte (42) verläuft.

4. Halter nach einem oder mehreren der vorherigen Ansprüche, dadurch gekennzeichnet, daß die Öffnungsrichtung des zweiten Klemmteils (46) senkrecht zu der Grundplatte (42) verläuft.

5. Halter nach einem oder mehreren der vorherigen Ansprüche, dadurch gekennzeichnet, daß der zweite Klemmteil (46) zwischen dem Hebelarm (39) und dem ersten Klemmteil (44) angeordnet ist.

6. Halter nach einem oder mehreren der vorherigen Ansprüche, dadurch gekennzeichnet, daß der Hebelarm (39) einen benachbarten Halter (40) endseitig überdeckt.

7. Halter nach einem oder mehreren der vorherigen Ansprüche, wobei seine axiale Abmessung dem Abstand zwischen Kühlrippen (18) auf dem Umfang der Teile (16a, 16b) und die Teile (16a, 16b) aufnehmenden Hülsen (26) entspricht.

## Claims

1. Holder (40 for fixing axially movable parts (16a, 16b) arranged parallel to one another, especially heat exchanger tubes, with at least two clamp parts (44, 46) each surrounding one of the parts (16a, 16b) and which are connected together by a base plate (42) and can be fitted on parts (16a, 16b) already set up, characterized in that the clamp parts (44, 46)
   a) each have an opening on their peripheral surface, of which the one is offset relative to the other by about 90 degrees in angle,
   b) can be fitted on parts (16a, 16b) already set up in that one of the clamp parts (44, 46) can be pushed radially on to one of the parts (16a, 16b) through its opening and can be pivoted about this into engagement in like manner with the other part (16b, 16a), and in that they
   c) are so fitted to the base plate (42) that a plane running centrally through the opening of the one clamp part (44) intersects with a plane running centrally through the opening of the other clamp part (46) in the centre point of the inner space enclosed by the other clamp part (46).

2. Holder according to claim 1, characterized in that the base plate (42) ends at one end in a lever arm (39).

3. Holder according to claim 1 or 2, characterized in that the opening direction of the first clamp part (44) runs parallel to the base plate (42).

4. Holder according to one or more of the preceding claims, characterized in that the opening direction of the second clamp part (46) runs perpendicular to the base plate (42).

5. Holder according to one or more of the preceding claims, characterized in that the second clamp part (46) is arranged between the lever arm (39) and the first clamp part (44).

6. Holder according to one or more of the preceding claims, characterized in that the lever arm (39) overlaps an adjacent holder (40) at the end.

7. Holder according to one or more of the preceding claims, wherein its axial dimensions correspond to the spacing between cooling fins (18) on the periphery of the parts (16a, 16b) and sleeves (26) receiving the parts (16a, 16b).

## Revendications

1. Dispositif de retenue (40) pour fixer des pièces (16a,16b) parallèles et mobiles axialement, notamment des tubes d'échangeurs de chaleur, comportant au moins deux éléments de serrage (44,46), qui entourent chacun l'une des pièces (16a,16b), sont reliés entre eux par l'intermédiaire d'une plaque de base (42) et peuvent être installés sur des pièces (16a,16b) déjà installées, caractérisé en ce que les éléments de serrage (44,46)
   a) possèdent, au niveau de leur surface enveloppe, des ouvertures respectives, dont l'une est décalée d'environ 90 degrés par rapport à l'autre,
   b) peuvent être appliqués sur des pièces (16A,16b) déjà installées, par le fait qu'un des éléments de serrage (44,46) peut être emmanché radialement, par son ouverture, sur l'une des pièces (16a,16b) et pivoté de la même manière autour de cette pièce, en étant en prise avec l'autre pièce (16b,16a), et
   c) sont disposées sur la plaque de base (42) de telle sorte qu'un plan passant au centre de l'ouverture d'un élément de serrage (44) recoupe un plan passant au centre de l'ouverture de l'autre élément de serrage (46), au centre de l'espace intérieur entouré par l'autre élément de serrage (46).

2. Dispositif de serrage selon la revendication 1, caractérisé en ce que la plaque de base (42) se termine, à l'une de ses extrémités, sous la forme d'un bras de levier (39).

3. Dispositif de retenue selon la revendication 1 ou 2, caractérisé en ce que la direction d'ouverture du premier élément de serrage (44) est parallèle à la plaque de base (42).

4. Dispositif de retenue selon l'une ou plusieurs des revendications précédentes, caractérisé en ce que la direction d'ouverture du second élément de serrage (46) est perpendiculaire à la plaque de base (42).

5. Dispositif de retenue selon une ou plusieurs des revendications précédentes, caractérisé en ce que le second élément de serrage (46) est disposé entre le bras de levier (39) et le premier élément de serrage (44).

6. Dispositif de retenue selon une ou plusieurs des revendications précédentes, caractérisé en ce que le bras de levier (39) recouvre, par son extrémité, un dispositif de retenue (40) voisin.

7. Dispositif de retenue selon une ou plusieurs des revendications précédentes, dans lequel les dimensions axiales du dispositif de retenue correspondent à la distance entre des ailettes de refroidissement (18) situées sur le pourtour des pièces (16a,16b) et des douilles (26) logeant les pièces (16a,16b).

**FIG. 1**

2/2

*FIG. 2*

*FIG. 3*

*FIG. 4*